# EUROPEAN PATENT APPLICATION

(11) **EP 2 026 580 A1**
(43) Date of publication of application: **18.02.2009**
(21) Application number: 07252366.5
(22) Date of filing: 12.06.2007
(51) Int. Cl.: H04N 7/173

(54) **Video processing**

(71) Applicant: British Telecommunications public limited company, 81 Newgate Street EC1A 7AJ (GB)
(72) Inventor: The designation of the inventor has not yet been filed
(74) Representative: Sayer, Robert David

(57) **Abstract**

In a method and system for processing video data in a video receiver module (11) comprising a receiver (13,30) for receiving video data from an over-the-air broadcast channel, and data storage means (42). Next, erroneous packets are identified in the received data and forward error correction used to correct at least a subset of the packets. The data, including the corrected packets, are stored for the complete programme. Subsequently, a communications link, for example a DSL broadband link, is established with a remote device (25) and a message is sent requesting replacement packets corresponding to erroneous packets not corrected by forward error correction. The received replacement packets are stored for subsequent replay in place of the corresponding erroneous packets.

## Description

This invention relates to a video processing method and module, and particularly a video processing method and module in which video is received from an over-the-air broadcast channel.

Digital terrestrial television (DTTV) is increasingly employed to transmit television signals in digital form to provide a greater number of channels and/or quality of service compared with analogue broadcasts. In the UK, DTTV is a broadcast service transmitted over-the-air for reception at customer-end receivers commonly known as set top boxes (STBs) via a conventional antenna or aerial. To avoid interference with existing analogue channels, the DTTV video data is transmitted at relatively low power and so is prone to poor coverage and reception for receivers in certain parts of the country. As a result, errors can be present in the received data which will appear as display glitches and/or audible 'clicks' in the sound data. To improve performance, forward error correction is employed, usually Reed-Solomon (R-S) block error correction. This provides an effective low overhead error detection and correction method for data delivered by broadcast. However, errors over 8 bytes in length will not be corrected by the R-S method and so will still present visible and/or audible artefacts to the viewer.

According to the invention, there is provided a method of processing video data in a video receiver module comprising a video receiver and data storage means, the method comprising: (a) receiving video data representing a programme transmitted in an over-the-air broadcast channel; (b) identifying erroneous packets in the received data and performing forward error correction to correct at least a subset of the packets; (c) storing data, including the corrected packets, for the complete programme, in the storage means; (d) subsequent to step (c), establishing a communications link with a remote device and requesting transmission of replacement packets corresponding to erroneous packets not corrected in step (b) using said communications link; and (e) receiving the requested replacement packets and storing them for replay in place of the corresponding erroneous packets.

In this way, large errors in the received data unable to be corrected using forward error correction can be corrected at a later time, namely once all data for the relevant programme is stored at the storage means. Replacement packets corresponding to at least some of the remaining uncorrected packets can be retrieved from a remote source over a communications link. In this respect, it will be understood that many STBs are sold with an internal digital video recorder, often called a DVR or PVR. Users therefore store entire programmes for viewing at a later time. In the method herein, errors remaining in such stored programmes can be replaced with correct data from a remote source.

Preferably, steps (d) and (e) are performed only if the data stored in step (c) has not yet been accessed for display.

In step (d), the communications link can be established over a shared network and the step can include monitoring the level of traffic on the network and requesting transmission of replacement packets only when the monitored level drops below a predetermined level. In this way, replacement packets are less likely to tie-up the network during busy periods which may occur if a large numbers of replacement packets are required from a large number of STBs in a similar location. Alternatively or additionally, replacement packets may only be requested at particular times of the day, e.g. off-peak times or during the night.

The received replacement packets may be encoded in a different format than those received from the over-the-air broadcast channel. The format of replacement packets may be more efficient than the originally broadcast packets, e.g. an H.264 encoded alternative to MPEG-2.

In the preferred embodiment, the communications link is an Internet Protocol (IP) link established between transceiving means in the module and a predetermined remote server.

According to a second aspect of the invention, there is provided a video receiver module comprising: a broadcast receiver arranged to receive video data representing programmes transmitted in an over-the-air broadcast channel; forward error correction means arranged to identify and correct at least a subset of the packets; storage means for storing data, including corrected packets, for the complete programme; and second error correction means arranged to identify, in the stored version of the complete programme, erroneous packets not corrected by forward error correction and to request transmission of replacement packets, corresponding to said uncorrected packets, from a remote source over a communications link, the received replacement packets being stored at the storage means for replay in place of corresponding erroneous packets.

The second error correction means can be arranged to request transmission of replacement packets only if the data in the storage means has not yet been accessed for display. The module may further comprise transceiving means for establishing the communications link to the remote source. The transceiving means can be arranged to establish the communications link over a shared network and to monitor the level of traffic on the network, the second error correction means being further arranged only to request transmission of replacement packets when the monitored level drops below a predetermined level.

According to a third aspect of the invention, there is provided a video set top box (STB) comprising: a broadcast receiver arranged to receive video data representing programmes transmitted in an over-the-air broadcast channel; a data modem for establishing an IP communications link with a predetermined remote source and communicating data therewith; forward error correction means arranged to identify and correct at least a subset of the packets; storage means for storing data, including corrected packets, for the complete programme; and second error correction means arranged to identify, in the stored version of the complete programme, erroneous packets not corrected by forward error correction and to request transmission of replacement packets, corresponding to said uncorrected packets, from the predetermined remote source using the IP communications link, the received replacement packets being stored at the storage means for replay in place of corresponding erroneous packets.

The invention will now be described, by way of example, with reference to the accompanying drawings in which:
Figure 1 is a block diagram of a DTTV broadcasting and receiving system;
Figure 2 is a block diagram showing functional components of a STB forming part of the receiving system shown in Figure 1;
Figure 3a is a diagram illustrating a format of a MPEG-2 transport stream in a DTTV broadcast;
Figure 3b is a diagram illustrating a format of a packetised elementary stream (PES) packet corresponding to a video or audio unit for decoding and presentation at a particular time;
Figure 4 is a flow diagram showing operating steps performed in the STB for decoding the received data and saving an error list identifying erroneous packets; and
Figure 5 is a flow diagram showing operating steps for obtaining packets from a remote server to replace erroneous packets identified in the saved error list.

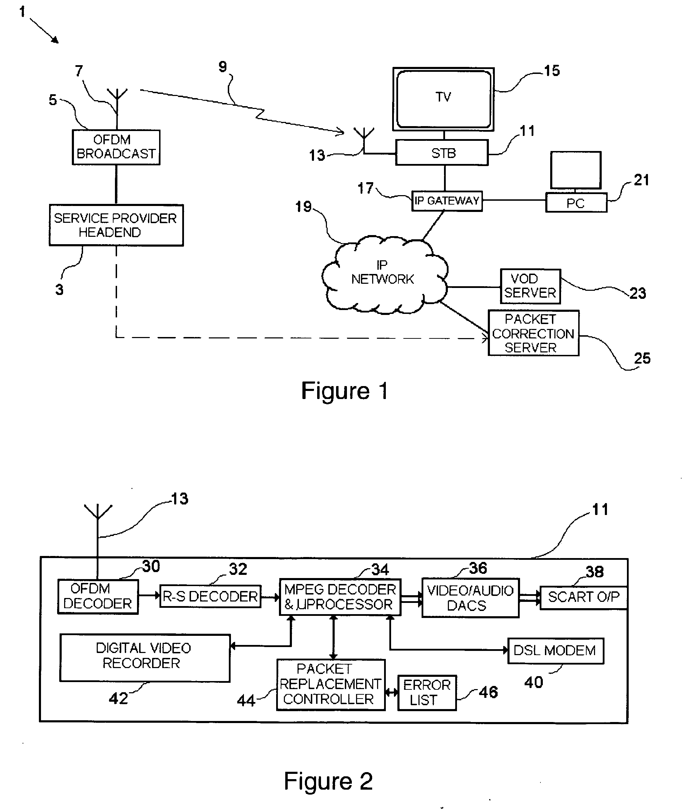

Referring to Figure 1, a DTTV broadcast end 1 includes a service provider (SP) headend 3 and OFDM broadcasting station 5. The SP headend 3 provides video content conforming, in this case, to the digital video broadcasting - terrestrial standard (DVB-T) although the method described herein can be applied to other standards such as DVB-S, DVB-H etc. As will be appreciated, DVB data is transmitted using MPEG-2 transport stream packets. The content is arranged as separate channels each comprising a plurality of distinct programmes broadcast in sequence according to a schedule. The OFDM broadcasting station 5 broadcasts each channel 9 over the air via a broadcast antenna 7.

A single DTTV receiver is shown in Figure 1 in the form of a STB 11 having a broadcast receiving antenna 13. The STB 11 is connected via a SCART port (not shown) to a television 15 and to an IP gateway 17 which provides a DSL connection to the Internet 19 for both the STB 11 and a personal computer (PC) 21 associated with the same user/household. Also shown connected to the Internet is a video on demand (VOD) server 23 and a packet correction server 25. The former provides, via the Internet connection, additional video content to the STB 11 in response to user requests. The latter stores video data corresponding to programmes transmitted from the broadcast end 1. As will be explained below, this enables data to be sent over the IP link to replace erroneous data detected in the broadcast signal and stored at the STB.

In this respect, it will be appreciated that over-the-air terrestrial broadcasts are often transmitted at low power to avoid interference with existing analogue channels. The signal is therefore prone to reception problems and packets received in error will be presented as picture glitches or audio 'clicks' unless some error correction is performed. The concept here is to request replacement packets for programmes that have been stored in a DVR associated with the STB 11, i.e. for playback at a later time, and which have errors that cannot be corrected using forward error correction.

Referring to Figure 2, the STB 11 includes an OFDM decoder for extracting the MPEG-2 transport stream from the received channel. This extracted MPEG-2 data is fed into a Reed-Solomon (R-S) decoder 32 which employs a well-known forward error correction algorithm to detect erroneous packets and, provided the error is less than 8 bytes in length, to correct that error. A detailed understanding of R-S encoding and decoding is not necessary for understanding the invention, although a detailed description of one type of R-S decoder is disclosed in US Patent Publication No. 2006/0150066. At the broadcast end 1, the MPEG-2 transport stream is encoded using a R-S encoder (not shown) which adds 16 parity bytes. These parity bytes are used by the R-S decoder 32 to identify and correct the erroneous packets.

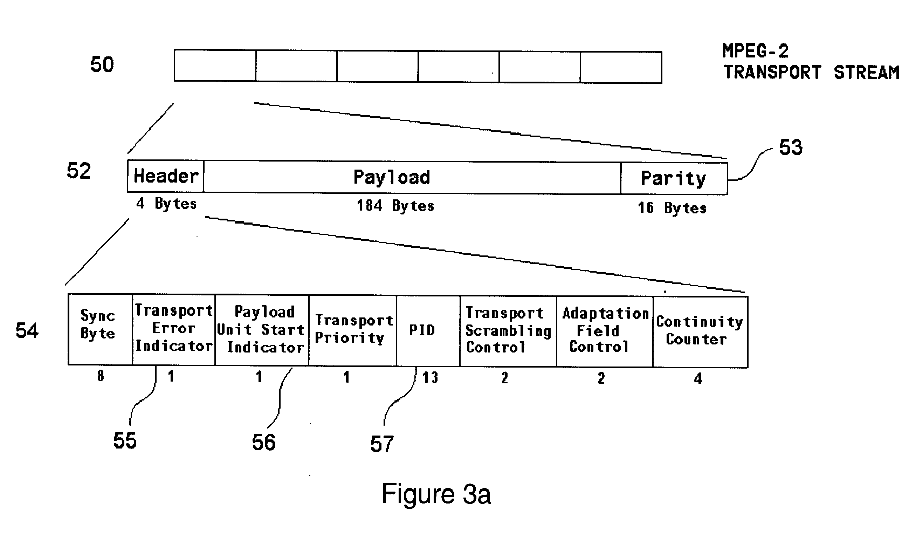

Referring to Figure 3a, the MPEG-2 transport stream 50 is shown and each packet 52 is seen to comprise a 4 byte header, a 184 byte payload and the above-mentioned 16 bytes of parity data 53. Each 4 byte header comprises a number of fields including a transport error indicator 55, a payload unit start indicator (PUSI) 56 and a packet ID 57. In the event that the R-S decoder 32 cannot correct a detected error, the transport error indicator 55 for that packet is set to '1'.

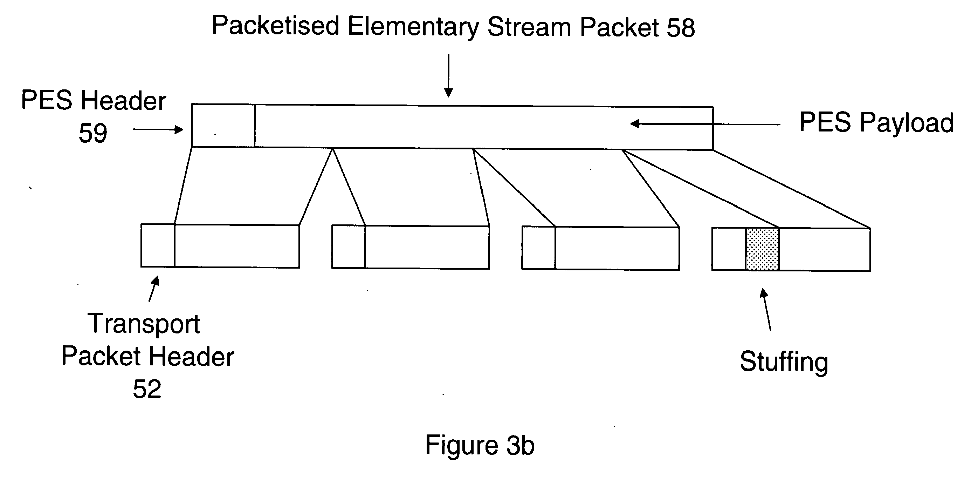

Figure 3b shows a packetised elementary stream (PES) packet 58 and how this is split between multiple transport stream packets. A PES packet 58 typically corresponds to a video or audio unit for decoding and presentation at a particular time and has associated decoding and presentation timestamps. The start of a PES packet is flagged in the PUSI bit of the 4 byte transport packet header 52 and the PES timestamps, when present, are coded in the PES header 59

Each packet from the R-S decoder 32, minus the parity bytes, is fed to a MPEG decoder and microprocessor 34, hereafter simply referred to as the MPEG decoder. Packets that contain no errors, including corrected packets, are simply decoded to generate the MPEG data which is fed to video and audio digital to analogue converters (DACS) 36 which buffer the data in preparation for output to the TV 15 via a SCART output 38. Erroneous packets, identified by the set transport error indicator 55, are discarded by the MPEG decoder 34 resulting in the characteristic picture glitches and/or audio clicks when output to the TV 15 at broadcast time.

A DVR 42 is provided as part of the STB 11. The DVR 42 provides storage means, typically in the order of 80 GBytes, to enable the storage of video programmes in response to user commands. Typically, the user will browse an electronic programme guide (EPG) on their TV 15 to select one or more programmes for recording, either now or at a subsequent broadcast time. The result will be a collection of one or more complete programmes, identifiable by programme name, which can be played back at a later time when the user so requests. An internal DSL modem 40 is also provided as part of the STB 11, the modem being arranged to communicate with the above-mentioned IP gateway 17. This enables bi-directional data transfer between the STB 11 and the VOD server 23 and the packet correction server 25.

Also connected to the MPEG decoder 34 is a packet replacement controller 44 which is connected to an error list memory 46. In the event that a user requests recordal of a programme on the DVR 42, the controller 44 is configured to identify packets where the transport error indicator is set. One means to fully identify the location of one or a burst of such erroneous packets is to find the PES packet that this transport packet is a part of, record the packet ID (PID), PES presentation time stamp (PTS), a transport packet count from the start of this PES packet to the first erroneous packet and a count of such packets. This information for each set of erroneous packets is stored in the error list 46 together with an identifier for the particular programme, e.g. the programme name. When the programme has finished recording in the DVR 42, all error burst information for that programme stored in the error list 46 is identified as suitable for further post-broadcast error correction. In this respect, 'post-broadcast' means that correction is not performed until the entire programme concerned has been broadcast.

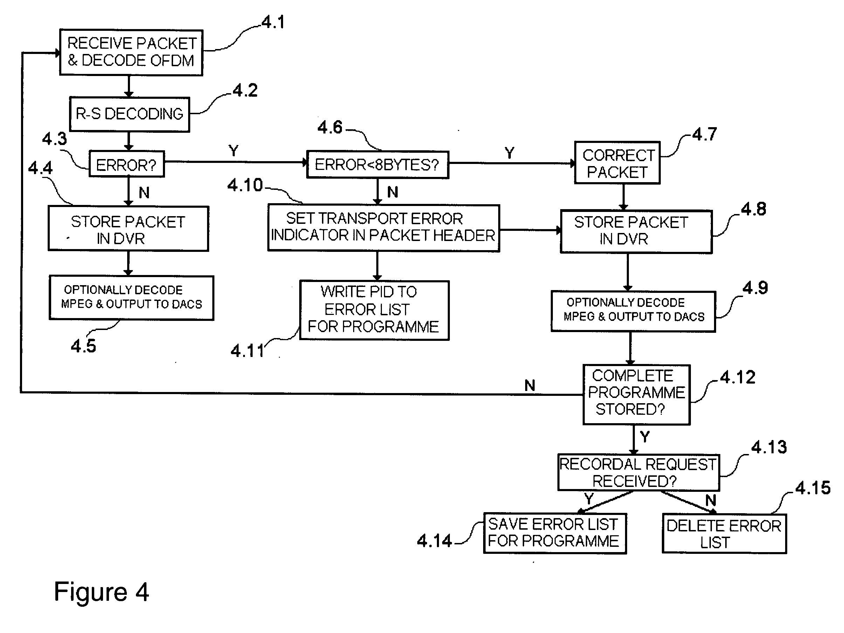

An overview of the decoding and recording process will now be described with reference to Figure 4. In a first step 4.1, a packet is received and decoded by the OFDM decoder 30. Next, in steps 4.2 and 4.3, the packet is applied to the R-S decoder 32 which determines whether an error is present. If not, in step 4.4, the packet is stored temporarily in the DVR 42. In addition, in step 4.5 the MPEG decoder 34 optionally generates video data which is output to the video/audio DACS 36 for buffering and display. In this respect, it will be appreciated that most commercial STBs with a DVR will automatically save incoming video packets to allow the user to pause and/or rewind the current video stream. If the user presses the 'record' button midway through the programme, the programme will actually be recorded from the time the user began watching the channel since the earlier packets will already be saved in the DVR. Otherwise, the packets will be deleted when the user changes channel or switches the STB off. Also the STB may be programmed to record but may be in standby mode, currently viewing VOD content or other pre-recorded content or may be viewing another channel on a second RF tuner input. In any of those cases the MPEG decoder would not decode and present this recorded video data for immediate display.

In the event that an error is detected, in step 4.6 it is determined whether the error is less than 8 bytes in length. If so, the R-S decoder 32 corrects the packet in step 4.7 and, in steps 4.8 and 4.9, the data is stored in the DVR and the MPEG decoder optionally generates the video for output as before.

If the error is greater than 8 bytes in length, in step 4.10, the R-S decoder 32 sets the transport error indicator 55 in the MPEG header 54. Such erroneous packets will be discarded by the MPEG decoder 34 and so error artefacts will be visible and/or audible if the video is being viewed at broadcast time. At substantially the same time, the packet replacement controller 44 identifies these erroneous packets and, in step 4.11, the error index information for these packets is written, temporarily at this stage, into the error list 46 for the programme.

The process repeats for subsequent packets until the programme finishes and so packets for the complete programme are stored in the DVR 42 (step 4.12) and error index information for all erroneous packets written into the error list. If, at any time before or during the aforementioned process, the user requested recordal of the programme, in steps 4.13 and 4.14 the error list for the complete programme is saved and flagged for post-broadcast error correction. If no recordal request was made, in step 4.15, the error list for that programme is deleted.

The flagged error list is used to request replacement versions of the erroneous packets over the Internet 19 from the packet correction server 25. This can be performed at any time post-broadcast. In this case, the packet replacement controller 44 applies rules determining the timing of such replacement requests, primarily to avoid peak times and/or when internet traffic is above a threshold. Therefore, the packet replacement controller 44 is preferably arranged to request replacement packets during predetermined hours, e.g. during the night and/or when the monitored throughput is below a predetermined level. This is particularly important in areas experiencing poor signal strength or coverage where possibly large numbers of STBs in that area will be requesting large numbers of replacement packets.

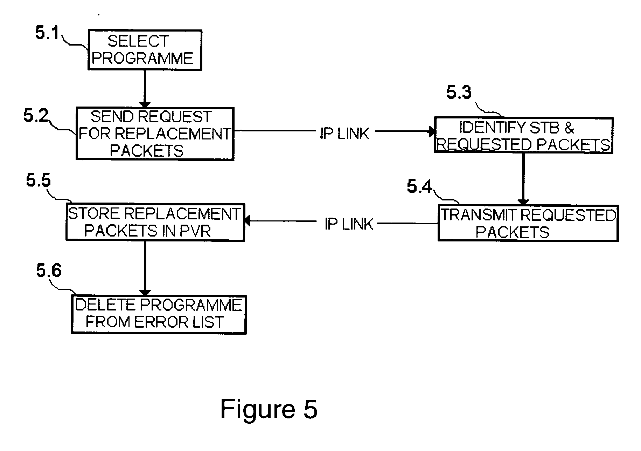

Referring to Figure 5, the basic steps performed by the packet replacement controller 44 in communication with the packet correction server 25 are indicated. In a first step 5.1, a flagged programme is selected from the error list 46. In a second step 5.2, a request message is generated identifying the programme and the error index information for the required replacement packets, the message being sent to the packet correction server 25. In step 5.3, the packet correction server identifies the requesting STB 11 and retrieves the requested replacement packets using the error index information in the message. In step 5.4, the requested replacement packets are sent to the requesting STB 11. In step 5.5, the packet replacement controller 49 stores the replacement packets in the DVR 42 in place of the erroneous packets. Alternatively, the replacement packets are stored in a separate area or buffer (which need not be in the DVR 42) and, at replay time, are output in place of the erroneous packets. Finally, in step 5.6, the error list is deleted.

As a result, the replayed version of the programme on the DVR 42 will have zero/fewer errors and so no/fewer artefacts will result when the user views the recording.

A further rule applied by the packet replacement controller 49 is that, should the user replay the recording before post-broadcast correction commences, the error list for that programme is deleted and so no correction will be employed. If a replay has yet to be requested, the chances of a replay request are obviously very high and so correction is considered worthwhile. Once replay has occurred, the likelihood of further replays is small and so correction is not considered worthwhile.

The replacement packets may be encoded in a different format than those received from the over-the-air broadcast channel. The format of replacement packets may be more efficient than the originally broadcast packets, e.g. an H.264 encoded alternative to MPEG-2.

## Claims

1. A method of processing video data in a video receiver module comprising a video receiver and data storage means, the method comprising:
(a) receiving video data representing a programme transmitted in an over-the-air broadcast channel;
(b) identifying erroneous packets in the received data and performing forward error correction to correct at least a subset of the packets;
(c) storing data, including the corrected packets, for the complete programme, in the storage means;
(d) subsequent to step (c), establishing a communications link with a remote device and requesting transmission of replacement packets corresponding to erroneous packets not corrected in step (b) using said communications link; and
(e) receiving the requested replacement packets and storing them for replay in place of the corresponding erroneous packets.

2. A method according to claim 1, wherein steps (d) and (e) are performed only if the data stored in step (c) has not yet been accessed for display.

3. A method according to claim 1 or claim 2, wherein, in step (d), the communications link is established over a shared network and the step includes monitoring the level of traffic on the network and requesting transmission of replacement packets only when the monitored level drops below a predetermined level.

4. A method according to any preceding claim, wherein the received replacement packets are encoded in a different format than those received from the over-the-air broadcast channel.

5. A method according to any preceding claim, wherein the communications link is an IP link established between transceiving means in the module and a predetermined remote server.

6. A video receiver module comprising:
a broadcast receiver arranged to receive video data representing programmes transmitted in an over-the-air broadcast channel;
forward error correction means arranged to identify and correct at least a subset of the packets;
storage means for storing data, including corrected packets, for the complete programme; and
second error correction means arranged to identify, in the stored version of the complete programme, erroneous packets not corrected by forward error correction and to request transmission of replacement packets, corresponding to said uncorrected packets, from a remote source over a communications link, the received replacement packets being stored at the storage means for replay in place of corresponding erroneous packets.

7. A module according to claim 6, wherein the second error correction means is arranged to request transmission of replacement packets only if the data in the storage means has not yet been accessed for display.

8. A module according to claim 6 or claim 7, further comprising transceiving means for establishing the communications link to the remote source.

9. A module according to claim 8, wherein the transceiving means is arranged to establish the communications link over a shared network and to monitor the level of traffic on the network, the second error correction means being further arranged only to request transmission of replacement packets when the monitored level drops below a predetermined level.

10. A video set top box (STB) comprising:
a broadcast receiver arranged to receive video data representing programmes transmitted in an over-the-air broadcast channel;
a data modem for establishing an IP communications link with a predetermined remote source and communicating data therewith;
forward error correction means arranged to identify and correct at least a subset of the packets;
storage means for storing data, including corrected packets, for the complete programme; and
second error correction means arranged to identify, in the stored version of the complete programme, erroneous packets not corrected by forward error correction and to request transmission of replacement packets, corresponding to said uncorrected packets, from the predetermined remote source using the IP communications link, the received replacement packets being stored at the storage means for replay in place of corresponding erroneous packets.
